# EUROPEAN PATENT APPLICATION

(11) **EP 1 041 417 A2**
(43) Date of publication of application: **04.10.2000**
(21) Application number: 00302718.2
(22) Date of filing: 31.03.2000
(51) Int. Cl.: G02B 6/38

(54) **Fiber optic connector sleeve**

(30) Priority: 01.04.1999 US 283038
(71) Applicant: Siecor Operations, LLC, Hickory, NC 28601-0489 (US)
(72) Inventor: Church, Thomas A., Saginaw, TX 76131 (US); De Jong, Michael, Fort Worth, TX 76137 (US); Theuerkorn, Thomas, Hickory, NC 28601 (US); Ugolini, Alan W., Hickory, NC 28602 (US)
(74) Representative: Bubb, Antony John Allen

(57) **Abstract**

A fiber optic connector sleeve (20) allows a multifiber connector (60) to be placed into a panel that formerly housed a single fiber connector, thus eleminating any need to alter the panels or equipment. The sleeve includes a plurality of internal walls (26, 28, 32). The sleeve may also provided in a duplex format.

## Description

The present invention relates generally to fiber optic connector sleeves and, more particularly, to fiber optic connector sleeves capable of retrofitting a connector housing with panels outfitted for single fiber connectors and connector sleeves with multifiber connectors and connector sleeves.

Fiber optic connector sleeves are frequently utilized to facilitate the mating of one or more fiber optic connectors. In this regard, a pair of fiber optic connectors can be inserted into the opposed ends of a fiber optic connector sleeve. The fiber optic connector sleeve serves to align the fiber optic connectors to a degree such that the optical fibers upon which the fiber optic connectors are mounted are appropriately aligned. As such, fiber optic connector sleeves can be mounted in a patch panel, within an enclosure, or the like so as to align a pair of fiber optic connectors inserted into opposite ends of the fiber optic connector sleeve. An example of such a connector sleeve is illustrated in U.S. Patent No. 5,359,688, assigned to the same assignee as the present invention ("the '688 Patent"). The connector sleeve disclosed therein is used with to SC connector, a connector mounted on a single optical fiber. Other connectors and connector sleeves are also known. Some of these include connectors that have multiple fibers mounted in each connector, such as the MT and the MTP connectors.

With the use of optical fibers increasing at a rapid rate, many users need to increase the number of optical fibers at any given installation. However, those that first installed connectors and connector sleeve that have a single optical fiber, are finding that the multifiber connectors and sleeves do not properly fit into their equipment, such as patch panels. They are then faced with replacing their equipment or attempting to retrofit it. Replacing the equipment may be cost prohibitive. However, retrofitting the single fiber installations with available multifiber connectors may not provide the best solution, and is time consuming and expensive.

Thus, a connector sleeve that allows for multifiber connectors to be installed in the same equipment that previously held a single fiber connector is needed. The present connector allows for a simple, cost-effective retrofit, allowing a single fiber application to be upgraded to a multifiber installation.

To achieve these and other advantages, and in accordance with the purpose of the invention as embodied and broadly described herein, the present invention is directed to a fiber optic connector sleeve comprising a sleeve housing having a plurality of interior walls, the interior walls defining a lengthwise extending passageway through the sleeve housing for receiving at least a portion of a fiber optic connector. The sleeve housing comprises a plurality of positioning ribs extending lengthwise through the passageway for engaging the fiber optic connectors and for positioning the connectors in the sleeve, an alignment projection on at least one of the plurality of interior walls and extending lengthwise along a central portion of the passageway for positioning the connectors in the sleeve and a recess in one of the plurality of interior walls for engaging a latch on each connector, and a retaining clip mounted on the connector sleeve to hold the sleeve in an SC-type connector panel.

Additional features and advantages of the invention will be set forth in the description which follows, and, in part, will be apparent from the description, or may be learned by practice of the invention. The objectives and other advantages of the invention will be realized and attained by the assembly particularly pointed out in the written description and claims hereof, as well as the appended drawings.

The invention is illustrated by way of example in the drawings, in which:
Figure 1 is a cross-sectional view of a prior art connector sleeve;
Figure 2 is a perspective view of a connector sleeve constructed in accordance with the invention;
Figure 3 is a perspective view of an SC adapter panel used with the connector sleeve of the present invention;
Figure 4 is a front elevational view of the connector sleeve of Figure 2;
Figure 5 is a top view of the connector sleeve of Figure 2;
Figure 6 is a bottom view of the connector sleeve of Figure 2;
Figure 7 is a side elevational view of the connector sleeve of Figure 2, and
Figure 8 is a cross-sectional view of the connector sleeve of Figure 5 along the line 8--8; and
Figure 9 is a perspective view of an alternative embodiment of a multifiber connector sleeve used to retrofit a single fiber connector panel.

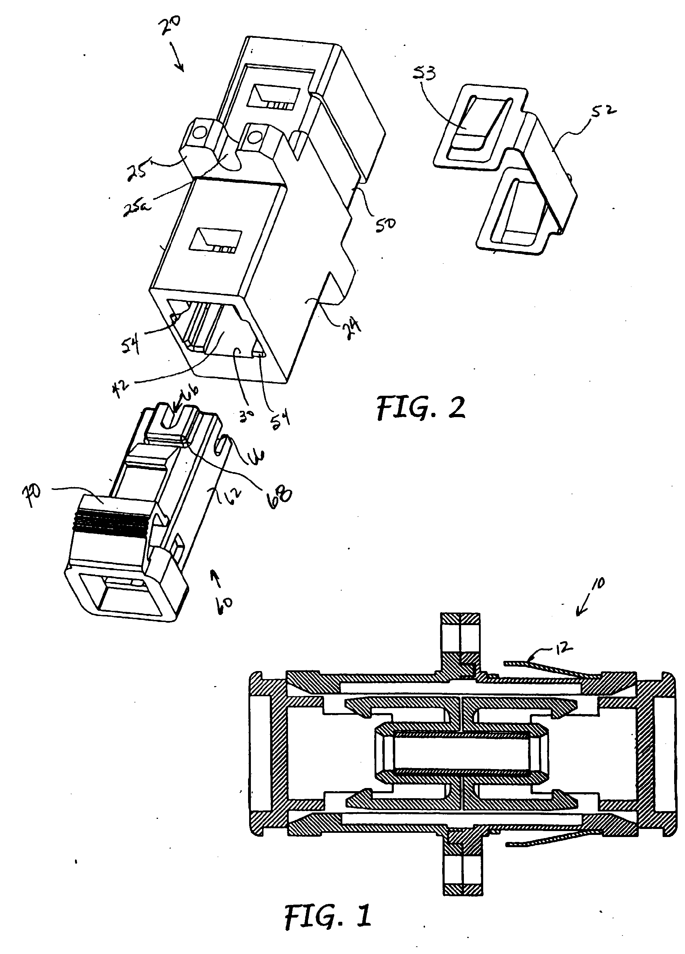

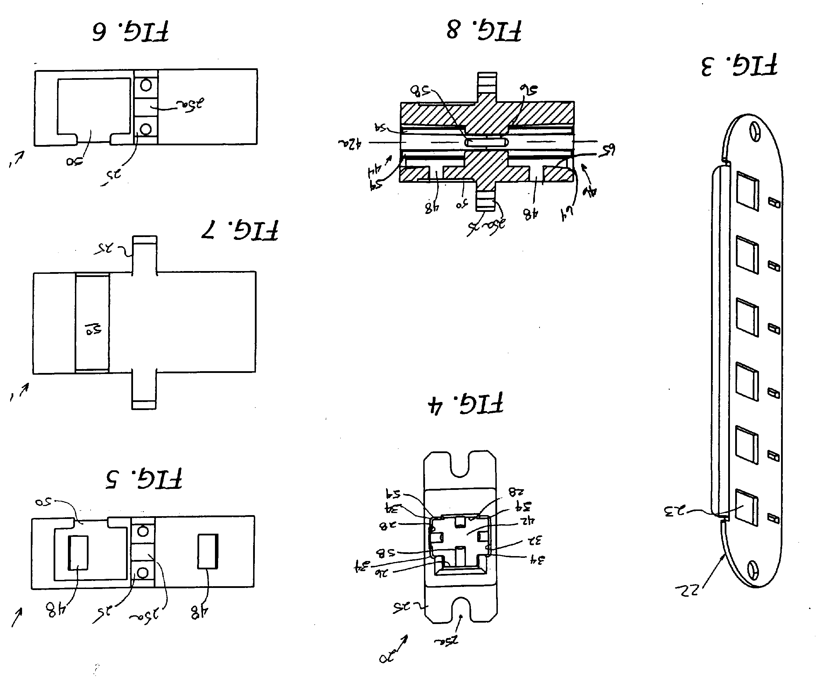

Figure 1 is a cross-section a known connector sleeve, an SC connector sleeve **10**. Typically, the SC connector had only one fiber secured in the ferrule. The connector sleeve **10** was pushed into an adapter panel (see Figure 3) with an aperture that was closely sized to the outer dimensions of the sleeve. The sleeve **10** has a clip **12** that slides over the sleeve 10 and engages two sides of the aperture to hold the sleeve **10** within the aperture.

The connector sleeves that hold the multifiber ferrules (e.g., MTP, MT RJ. etc.) are typically of a different size than the SC connector sleeve, they are typically smaller. Additionally, the multifiber connector sleeves are also designed to be held in the apertures of the panel with screws or other fasteners, rather than with a clip as with the SC. As a result, these multifiber connector sleeves cannot simply be inserted into the old panels that held the SC connector sleeves without modification to either the connector sleeve or the panel/aperture itself.

The present invention, illustrated in a perspective view in Figure 2, is a connector sleeve **20** that holds a multifiber connector and fits into the SC connector sleeve apertures. A standard adapter panel **22** with apertures **23** is shown in Figure 3. The connector sleeve **20** eliminates the need to replace the adapter panels **22** or to drill holes in the adapter panels for screws that are not present on the standard adapter panel **22**. The exterior features of connector sleeve **20** are further shown in Figures 4-7. Connector sleeve **20** is preferably a unitary (monolithic) connector sleeve that can be molded in one piece, unlike some of the previous SC connector sleeves (see, e.g., the '688 patent). Connector sleeve **20** has an outer surface **24** that is generally rectangular (and corresponds to the SC connector sleeve). The connector sleeve **20** may also have at least one flange **25** on the outer surface **24**, but two are preferable in that they prevent the sleeve from being inserted too far into the aperture **23** on the adapter panel **22** and, being arranged on a shorter side of the connector sleeve **20**, allow for maximum spacing in the panel. The flanges **25** also have an opening **25a** that allows for other methods of securing the sleeve **20** to the panels **22**.

The connector sleeve **20** has inner walls **28, 32**, which intersect at comers **34** and fore a passageway **42** through the sleeve **20**. The passageway **42** opens at opposing ends **44,46** of sleeve **20**. A multifiber connector (housing of the connector shown in Figure 2) is inserted into the passageway at first end **44** to engage a second multifiber connector inserted at second end **46** (not shown). While the connector sleeve **20** is a mirror image about the flange **25**, it may also be possible to have a different style connector or arrangement at each end (discusses more below).

The connector sleeve **20** has two openings **48**, one in each side of the sleeve **20**, to receive a latch from the inserted connector. In the preferred embodiment, the openings **48** open completely (i.e., a window) from the outside through to the passageway **42**. However, the openings **48** could also be recesses on inner wall **26** of the sleeve **20** instead. One end of the sleeve **20** also has a recessed portion **50** in a portion of the outer surface **24** of the sleeve **20** for a retaining clip **52**, which is used to secure the connector sleeve **20** in the aperture **23** of the adapter panel **22** as it was in the SC sleeve **10**. In the preferred embodiment, the retaining clip **52** is a c-shaped clip (see Figure 2) that fits flush into the recessed portion **50**, to prevent the sleeve **20** from catching on the adapter panel **22**. While the recessed portion **50** and retaining clip **52** are shown at only one end of the sleeve **20**, the sleeve **20** could have a recessed portion at either or both ends **44,46**, to allow maximum flexibility in inserting the sleeve into the adapter panels **22**. Other types and shapes of retaining clip **52** could be used. For example, the retaining clip **52** may only have one tab **53**, rather than the two tabs **53** shown in Figure 2.

Figures 4 and 8 best show the internal configuration of the sleeve, portions of which are described in a patent application (EP-99305636.5) assigned to the same assignee as the present invention, the contents of which are incorporated herein by reference. The connector sleeve **20** has positioning ribs **54** that extend from the corners **34** along inner walls **28** and into the passageway **42**. Thus, the inner walls **28** are recessed themselves from the positioning ribs **54**. However, the wall **32** does not have a stepped profile as do inner walls **28** due to the recessed portion **50**. The wall **32** is constant along its height and depth into the passageway **42** because the wall would be too thin along the area coincident with the recessed portion **50** if a recessed portion similar to portions **28,30** were attempted.

The ribs **54** generally extend lengthwise from the opposed ends **44,46** of the fiber optic connector sleeve **20** to a medial portion **56** of the fiber optic connector sleeve **20**. Although the positioning ribs **54** can extend lengthwise through the entire fiber optic connector sleeve **20**, the positioning ribs **54** typically terminate or are interrupted in a medial portion **56** of the fiber optic connector sleeve **20**, which may include various other alignment features, such as the alignment projections **58** that are designed to engage corresponding castellations **66** defined by the forward end of the fiber optic connector housing **60.**

The positioning ribs **54** engage the fiber optic housing **60** and position the fiber optic connector within the fiber optic connector sleeve **20**. In particular, the positioning ribs **54** engage corresponding portions of the outer housing **62** of the fiber optic connector housing **60** in order to appropriately position the fiber optic connector within the fiber optic connector sleeve **20**.

As illustrated in Figure 4, the connector sleeve **20** of one advantageous embodiment includes positioning ribs **54** that have a L-shape in lateral cross-section. In other words, the positioning ribs **54** of this advantageous embodiment includes a first portion that extends lengthwise along one of the walls that define the respective comer and a second portion that extends lengthwise along the other wall that defines the respective corner (except for those along wall **32** as discussed above). As such, the positioning ribs **54** can engage corresponding corners of the outer housing **62** of the fiber optic connector housing **60** that is inserted through the end of the fiber optic connector sleeve **20** and can serve essentially as a track to guide the fiber optic connector housing **60** and the fiber secured therein (not shown) lengthwise through the passageway **42** defined by the fiber optic connector sleeve **20**.

As shown in longitudinal cross-section in Figure 8, the positioning ribs **54** preferably extend parallel to a lengthwise extending axis **42a** defined by the passageway **42**. The positioning ribs are therefore untapered in a lengthwise extending direction. As such, the positioning ribs will serve to engage and align a fiber optic connector housing **60** having an untapered outer housing **62** throughout the length of the fiber optic connector sleeve **20.** As shown in Figures 2 and 8, however, the portions **64** of the positioning ribs **54** immediately adjacent the opposed ends of the fiber optic connector sleeve **20** can be beveled or chamfered in order to provide a lead-in feature that facilitates insertion of the fiber optic connector into the fiber optic connector sleeve **20**. However, as seen in Figures 4 and 8, inner wall **28** on the bottom of the sleeve **20** is tapered, sloping downward from the medial portion **56** to the ends **44,46** of sleeve **20**.

The sleeve also has a second chamfered (or tapered) portion **65** on the top inner surface **26**, as can best be seen in Figure 8. The chamfered portion **65** extends from the first chamfered portion **64** rearward to the windows **48**. This chamfered portion **65** allows the connector housing **60** to withstand some side loads without causing the latch **70** to be unlatched from the window **48**. If the chamfered portion **65** were parallel to axis **42a** rather than chamfered, that surface (and specifically the edge by the first chamfered portion **64**) would then act as a pivot point on the latch **70** when any stresses are placed on the rearward end of the connector housing **60.** With the rearward end of the sleeve **20** providing a pivot point so far back on the latch **70**, only a slight movement may cause the front end of the latch to move downward and out of window **48**. Thus, the second chamfer portion **65** allows stresses to be placed on the connector housing 60 without causing the housing to be unconnected from the sleeve **20.**

The passageway **42** also has alignment projections **58** on each of the along inner walls **26,28,32** and extend into the passageway **42.** The alignment projections **58** aid in mechanical and optical alignment of the connectors inserted into the connector sleeve **20.** In the preferred embodiment, the fiber optic connector housing **60** has castellations **66** that engage the alignment projections **56**. Interior wall **26** is even more recessed than interior walls **28** to allow for the insertion of an alignment key **68** that is found on the connector housing 60.

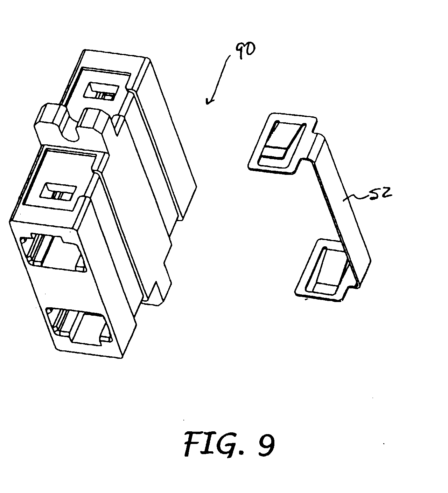

The embodiment shown in Figures 2 and 4-8 is a high density version, because it allows the greatest number of connector sleeves to be used in any defined space. With the connectors oriented in panel **22** with latch **70** of connector housing **60** pointing upward, more panels **22** can be placed in a patch panel in a side by side relationship. However, as shown in Figure 9, the passageway **42** could be rotated 90°, putting the key toward one side, rather than the top. This configuration allows for fewer numbers of panels and connectors, requiring more space between each of the adapter panels **22** to access the latch **70** on each of the connectors. It should be noted that the ends **44,46** are both oriented in the same orientation and have the same configuration in the preferred embodiment. However, one end of the sleeve **20** may have the key **68** pointed upward and the key on the other end oriented toward the bottom (providing the polarity of the fibers is accounted for), thus allowing for a different configuration on the front and back of the panel **22.** Moreover, it may also be possible to have a different configuration on one end that is different from the generally rectangular configuration shown in the preferred embodiment on the other end.

Still another alternative is having two different passageways in a single connector sleeve, as shown in Figure 9. This connector sleeve **90** fits into a duplex SC connector panel (not shown), as sleeve **20** fits the simplex SC connector panel. As known to those in the art, the duplex SC connector sleeve is essentially a double-wide version of the simplex connector sleeve **20**. Therefore, the connector sleeve **90** is constructed similar to connector sleeve **20** in that it would fit in the duplex panels. It should be noted that for ease of access to the latches on the connectors, the alignment keys are oriented 180° from one another, allowing easy access to the latches on the connector housings. Alternatively, the alignment keys could be oriented toward the long side of the sleeve to allow for a different configuration.

While the invention has been shown or described in only some of its forms, it should be apparent to those skilled in the art that it is not so limited, but is susceptible to various changes without departing from the scope of the invention as defined in the appended claims.

## Claims

1. A fiber optic connector sleeve comprising:
a sleeve housing having a plurality of interior walls, the interior walls defining a lengthwise extended passageway through the sleeve housing for receiving at least a portion of a fiber optic connector, the sleeve housing including:
a plurality of positioning ribs extending lengthwise through the passageway for engaging the fiber optic connectors and for positioning the connectors in the sleeve;
an alignment projection on at least one of the plurality of interior walls and extending lengthwise along a central portion of the passageway for positioning the connectors in the sleeve; and
a recess in one of plurality of interior walls for engaging a latch on each connector; and
a retaining clip mounted on the connector sleeve to hold the sleeve in an SC-type connector panel.

2. A fiber optic connector sleeve according to Claim 1, wherein the sleeve housing has a recessed portion on one outside surface and the retaining clip is c-shaped and configured to fit within the recessed portion.

3. A fiber optic connector sleeve according to Claim 1 or 2, wherein the sleeve housing is monolithic.

4. A fiber optic connector sleeve according to any one of Claims 1-3, further comprising at least one flange on an outside surface of the sleeve.

5. A fiber optic connector sleeve according to any one of Claims 1-4, wherein the plurality of interior walls includes at least two opposing walls in the passageway and the two opposing walls taper inward in a lengthwise extending direction to facilitate insertion of a fiber optic connector into the fiber optic connector sleeve.

6. A fiber optic connector sleeve according to any one of Claims 1-5, wherein the plurality of interior walls intersect to define a plurality of corners, and the positioning ribs extend into the passageway from locations proximate at least two comers of the passageway.

7. A fiber optic connector sleeve according to Claim 6, wherein at least two of the plurality of interior walls extending between the positioning ribs are recessed relative to the ribs, and a third interior walls is substantially flat.

8. A fiber optic connector sleeve according to Claim 7, wherein the sleeve housing has a recessed portion on an outside surface corresponding to the third interior wall and wherein the retaining clip is c-shaped and configured to fit within the recessed portion.

9. A fiber optic connector sleeve according to any one of Claims 1-8, wherein the sleeve housing has four interior walls, the fourth wall having a recessed portion to receive an alignment key on a fiber optic connector.

10. A fiber optic connector sleeve according to Claim 9, wherein the said fourth wall has a second recessed portion to engage a latch on a fiber optic connector.

11. A fiber optic connector according to Claim 5 or any one of Claims 6-10 as appended thereto, wherein one of the two opposing walls has a first tapered portion and a second tapered portion, the rates of taper being different for the first and the second portions.
